Europäisches Patentamt

European Patent Office

Office européen des brevets

(19)

(11) **EP 1 186 880 A1**

(12) **DEMANDE DE BREVET EUROPEEN**

(43) Date de publication:
**13.03.2002 Bulletin 2002/11**

(51) Int Cl.⁷: **G01N 11/06**

(21) Numéro de dépôt: **00119738.3**

(22) Date de dépôt: **09.09.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **SOCIETE DES PRODUITS NESTLE S.A.**
**1800 Vevey (CH)**

(72) Inventeur: **Nicolas, Pierre**
**1806 Saint-Legier (CH)**

(74) Mandataire: **Micheli & Cie**
**Rue de Genève 122,**
**Case Postale 61**
**1226 Genève-Thonex (CH)**

(54) **Viscosimètre et procédé pour déterminer la viscosité de substances**

(57) Le viscosimètre comprend un capillaire (10) d'une section prédéterminée dont un orifice d'entrée (14) est en contact avec le liquide à mesurer (11). Des premiers moyens sont destinés à appliquer une différence de pression ($\Delta p$) entre les orifices d'entrée (14) et de sortie (15). Des moyens optiques et chronométriques (36,37,38) permettent de suivre l'avance du ménisque du liquide aspiré dans le tube (10) et de fournir des couples de mesure distance parcourue (L) - temps (t) à une unité de calcul (39) qui détermine la viscosité et/ou les caractéristiques rhéologiques du liquide étudié au moyen d'une forme intégrée de l'équation de Hagen-Poiseuille.

Fig.2

**Description**

La présente invention concerne un viscosimètre comprenant un tube d'une section prédéterminée destiné au passage d'un liquide dont on désire déterminer la viscosité et des premiers moyens pour appliquer une différence de pression prédéterminée entre les orifices d'entrée et de sortie du tube.

La mesure de viscosité est un élément important dans la caractérisation de produits liquides naturels ou de synthèse, que ce soit dans le domaine alimentaire (huiles, crèmes, sauces, pâtes, liants), cosmétique (crèmes, émulsions, pâtes), biologique (solutions de protéines, polysaccharides, liquides biologiques) ou chimique (polymères de synthèse, huiles lubrifiantes, peintures, etc.).

Cette mesure peut être effectuée en utilisant des appareils basés sur différents principes.

Parmi ceux-ci on trouve principalement des viscosimètres capillaires, des viscosimètres rotatifs et des viscosimètres à chute de bille.

La mesure de viscosité dans un viscosimètre capillaire est basée sur l'équation de Hagen-Poiseuille, valable pour les liquides newtoniens:

$$\eta = \frac{\pi R^4 \Delta p}{8LQ} \tag{1}$$

où:

$\eta$ est la viscosité du liquide
$\Delta p$ est la différence de pression appliquée aux extrémités du tube
$R$ est le rayon interne du capillaire
$L$ est la longueur du capillaire
$Q$ est le débit volumique à travers le capillaire

Dans les viscosimètres capillaires couramment utilisés, $L$ et $R$ étant constants, la connaissance de $\Delta p$ et de $Q$ permet de déterminer aisément la viscosité en utilisant la formule (1). Ainsi dans les viscosimètres à bulbe de type Ubbelohde, par exemple, on mesure le temps de passage d'un volume déterminé de liquide au travers d'un capillaire de dimensions connues et à une température donnée. Le liquide, soumis à la force de gravité, s'écoule dans un réservoir.

Bien que ces viscosimètres soient utilisés couramment, ils présentent cependant un certain nombre de désavantages:

- Le temps de mesure est habituellement long, le temps d'écoulement se situant généralement entre 3 et 15 minutes.
- L'équilibrage de l'échantillon à la température désirée dans le viscosimètre exige une longue période de temps due à l'épaisseur du tube qui entrave le transfert de chaleur.
- La propreté du capillaire étant un élément important pour la précision des mesures, les opérations de nettoyage et de séchage sont souvent plus longues que les mesures elles-mêmes et exigent souvent l'utilisation de solvants hasardeux.
- Les quantités d'échantillons à mettre en oeuvre sont généralement assez importantes et ce type d'appareil ne permet pas de travailler sur des micro-quantités de liquide, telles celles rencontrées dans le cas de liquides biologiques disponibles seulement en quantité limitée.

La présente invention a pour but de remédier à ces inconvénients et de créer un viscosimètre permettant d'obtenir la viscosité et les caractéristiques rhéologiques de substances très diverses très rapidement et avec une grande fiabilité.

Le viscosimètre selon l'invention est caractérisé à cet effet par le fait qu'il comprend des seconds moyens pour détecter le déplacement du ménisque dudit liquide dans le tube au moins partiellement non rempli de liquide, ces seconds moyens étant agencés de façon à déterminer le temps lorsque le liquide atteint au moins un point situé à une certaine distance de l'orifice d'entrée du tube et des troisièmes moyens pour calculer la viscosité et/ou les caractéristiques rhéologiques du liquide à partir des valeurs de distance et de temps grâce à un traitement mathématique.

Ces caractéristiques permettent d'obtenir les valeurs de viscosité non seulement pour les liquides newtoniens, mais également non newtoniens dans une seule expérience et une seule série de mesures d'un ou plusieurs couples distance-temps. La durée de mesure est donc très rapide. Le tube qui peut être un capillaire amovible et interchangeable est très rapidement équilibré à la température désirée et la propreté du capillaire est garantie sans opérations de nettoyage et de séchage. Les quantités d'échantillons peuvent être très faibles et la substance analysée peut être récupérée entièrement. Du fait de la rapidité de mise en oeuvre du viscosimètre et des mesures, il est possible d'étudier point par point les variations de la viscosité de produits évoluant dans le temps par exemple au repos. La lecture est très aisée du fait que le ménisque est bien visible. La gamme des viscosités mesurées est très étendue en variant la différence de pression et la section du tube. Les résultats de mesure sont directement donnés en unités non arbitraires (Pa.s). En une seule expérience on obtient une couverture d'une large plage de vitesses de cisaillement permettant d'étudier très rapidement et aisément les propriétés rhéologiques de la substance mesurée.

De façon avantageuse, le viscosimètre est caractérisé par le fait que le calcul de la viscosité est effectué selon les formes intégrées suivantes de l'équation de Hagen-Poiseuille:

$$\eta = \frac{\Delta p R^2 t}{4 L^2}$$

dans le cas d'un tube horizontal ou:

$$\eta = \frac{-R^2 \varrho g t}{8(L + \frac{\Delta p}{\varrho g} In \frac{\Delta p - \varrho g L}{\Delta p})}$$

dans le cas d'un tube vertical, le déplacement du liquide s'effectue en montant ;
où

$\eta$ est la viscosité du liquide
$\Delta p$ est la différence de pression appliquée aux extrémités du tube
L représente la distance parcourue par le liquide dans le tube pendant le temps t
R est le rayon interne du tube
$\varrho$ est la masse volumique du liquide
g est la constante gravitationnelle.

On obtient ainsi très rapidement la viscosité de liquides newtoniens en utilisant un seul couple de mesure distance-temps. Il est bien entendu possible de mesurer plusieurs couples distance-temps afin de déterminer en une seule opération si le liquide est newtonien ou non .

Favorablement les troisièmes moyens sont agencés pour calculer

A) la contrainte de cisaillement $\tau$ selon l'équation

$$\tau = \frac{R \Delta p}{2L}$$

dans le cas d'un tube horizontal, ou

$$\tau = \frac{R(\Delta p - \varrho g L)}{2L}$$

dans le cas d'un tube vertical, le déplacement du liquide s'effectuant en montant.
B) la vitesse de cisaillement D selon l'équation

$$D = \frac{4 \frac{dL}{dt}}{R},$$

et
C) les viscosités apparentes $\eta$ selon l'équation $\eta = \tau/D$ pour les couples distance parcourue (L) - temps (t).

Grâce à ce traitement mathématique, les propriétés rhéologiques de liquides non newtoniens peuvent être obtenues précisément et très rapidement.

Selon un mode d'exécution préféré le tube est un capillaire fixé de façon amovible à au moins une vanne permettant de relier le capillaire alternativement aux premiers moyens constitués par un dispositif manostat basé sur la pression hydrostatique ou à un conduit d'échappement.

Ces caractéristiques permettent d'obtenir un viscosimètre très précis, d'une construction et d'un fonctionnement simple et d'un prix de revient modéré, tout en fournissant des résultats rhéologiques très complets de la substance étudiée.

L'invention concerne également un procédé pour déterminer la viscosité d'un liquide selon lequel on fait passer le liquide dans un tube d'une section prédéterminée en appliquant une différence de pression prédéterminée entre les orifices d'entrée et de sortie du tube, caractérisé par le fait que l'on détecte le déplacement du ménisque du liquide dans le tube qui est au moins partiellement non rempli de liquide, que l'on détermine le temps lorsque le liquide a atteint au moins un point situé à une certaine distance depuis l'orifice d'entrée du tube et que l'on calcule la viscosité et/ou les caractéristiques rhéologiques du liquide à partir des valeurs de distance et de temps au moyen d'un traitement mathématique.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

La figure 1 est une vue schématique de ce mode d'exécution.

La figure 2 est une vue schématique agrandie d'une partie de la figure 1.

Les figures 3A, 3B, 3C et 4A, 4B, 4C présentent des graphiques de vérifications expérimentales du procédé et du viscosimètre avec des standards de viscosimétrie.

Les figures 5A, 5B, 5C et 6A, 6B, 6C présentent des graphiques de mesures viscosimétriques de substances liquides newtoniennes.

Les figures 7A, 7B, 7C et 8A, 8B, 8C présentent des graphiques de mesures viscosimétriques de substances liquides non newtoniennes.

La figure 9 est un graphique montrant les variations au cours du temps de la viscosité mesurée d'un mélange farine/eau au repos et soumis à une agitation mécanique.

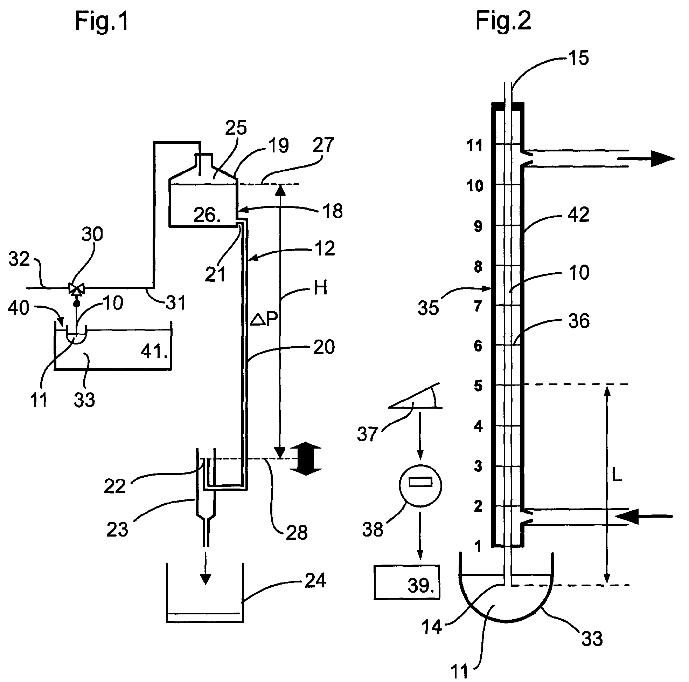

Le mode d'exécution de viscosimètre représenté aux figures 1 et 2 comprend un tube, sous forme d'un capillaire 10 d'une section prédéterminée, destiné au passage d'un liquide 11 dont on désire déterminer la viscosité et/ou les caractéristiques rhéologiques. Il comprend en outre des moyens 12 pour appliquer une différence de pression $\Delta p$ prédéterminée entre l'orifice d'entrée 14 et l'orifice de sortie 15 du capillaire. Dans ce mode d'exécution, ces moyens 12 sont constitués par un dispositif manostat 18 basé sur la pression hydrostatique. Ce dernier comprend un récipient fermé 19 partiellement rempli d'un liquide 26, par exemple de l'eau, et d'un tuyau flexible 20 relié par une de ses extrémités 21 à la base du récipient 19 et dont l'autre extrémité recourbée 22 aboutit dans un entonnoir 23 placé au-dessus d'un bac de récupération 24. Dans la partie supérieure 25 du récipient 19 au-dessus du niveau d'eau 27, il existe donc une dépression ou différence de pression $\Delta p$ correspondant au poids de la colonne d'eau d'une hauteur H entre le niveau d'eau 27 dans le récipient 19 et le niveau 28 de l'orifice 22 du tuyau flexible 20. Cette hauteur H peut-être réglée et ajustée par déplacement de l'orifice 22 de façon à obtenir la différence de pression désirée par exemple de 5 à 100 cm, voire 300 cm ou plus.

L'orifice de sortie 15 du capillaire 10 est connecté de façon amovible à un premier orifice d'une électrovanne 30 dont un second orifice est connecté à une première extrémité d'un tuyau 31 menant au récipient 19 et dont un troisième orifice est relié à un conduit d'échappement et de mise à l'air 32. La seconde extrémité du tuyau 31 est introduite de façon étanche dans la partie supérieure 25 du récipient 19. Ainsi, l'électrovanne 30 permet dans une première position d'appliquer la différence de pression $\Delta p$ ou la dépression au capillaire et dans une seconde position de mettre le capillaire à l'échappement.

L'orifice d'entrée 14 du capillaire 10 est placé à la surface du liquide 11 à examiner contenu dans un récipient 33 ou à une très faible profondeur de ce liquide, par exemple 0,5 millimètres de sa surface.

Le viscosimètre comprend en outre des moyens 35 pour détecter et chronométrer l'avance du liquide 11 dans le capillaire 10 qui est au début de l'expérience vide. Ces moyens sont dans le présent mode d'exécution optiques et comportent une règle graduée 36 disposée en regard du capillaire 10. Un organe de détection opto-électronique ou l'oeil d'un observateur 37 permet de chronométrer la durée t lors de laquelle le liquide 11 aspiré dans le capillaire 10 atteint une ou plusieurs positions prédéterminées dans ce capillaire séparées d'une distance L de l'orifice d'entrée 14. L'organe de détection opto-électronique ou l'observateur relève alors cette ou ces durées t au moyen d'un chronomètre 38.

Les résultats de chronométrie sont ensuite introduits dans une unité de calcul 39 agencée de façon à calculer la viscosité et/ou les caractéristiques rhéologiques du liquide à partir des valeurs de longueur L et de durée t au moyen d'un traitement mathématique exposé plus loin.

Le viscosimètre comprend en outre des moyens de régulation 40 de la température de l'échantillon de liquide 11 contenu dans le récipient 33 et du capillaire 10. Ainsi, le récipient 33 est placé dans un bac à eau thermostatisée 41 et le capillaire 10 est placé dans un tube 42 parcouru par de l'eau thermostatisée et portant la règle graduée 36. Ainsi, l'équilibrage de l'échantillon à la température désirée est obtenu de façon précise et très rapide du fait des faibles quantités d'échantillons nécessités par ce viscosimètre et des parois très fines du capillaire 10. Au lieu que le tube 42 soit parcouru directement par l'eau thermostatisée, cette dernière pourrait également circuler dans un tuyau disposé dans le tube au voisinage du capillaire. La mise en place du capillaire dans le tube 42 est ainsi facilitée.

La mise en oeuvre de ce viscosimètre et les mesures sont très rapides. On ajuste la hauteur H pour obtenir la différence de pression $\Delta p$ souhaitée. On fixe un capillaire 10 d'une section à rayon R et de longueur adéquate à la sortie de l'électrovanne 30, de telle manière que son orifice d'entrée 14 est bien en contact avec le liquide à analyser. Après équilibrage de la température, on relie au moyen de l'électrovanne 30 le capillaire 10 à la différence de pression $\Delta p$ et on observe l'avance du liquide 11 en chronométrant le temps t lors du passage du liquide à certains niveaux du capillaire, par exemple à L=1, 2, 3, 4, 5, 6 et 7 cm de l'orifice d'entrée 14.

A la fin des mesures on ferme la connexion avec le tuyau 31 et on met le capillaire 10 à l'échappement au moyen de l'électrovanne 30. Le liquide contenu dans le capillaire peut alors être récupéré très facilement.

La mise en oeuvre d'une analyse de viscosimétrie est donc très rapide. La lecture des durées peut être effectuée rapidement et aisément, car le ménisque du liquide avançant dans le capillaire 10 vide est bien visible. Pour les liquides newtoniens on peut obtenir une mesure de viscosité en moins d'une minute. En variant la différence de pression $\Delta p$ et le rayon R de la section du capillaire 10, on peut analyser des substances dans une gamme très étendue de valeurs de viscosités. Le viscosimètre est bien adapté à des microanalyses ne nécessitant que de très faibles quantités d'échantillons dont la récupération après mesure est facile. L'utilisation de capillaires 10 à usage unique est possible assurant des conditions de propreté optimales sans nettoyage.

Le principe de mesure conformément à la présente invention est donc basée sur l'observation de l'avance du liquide dans le capillaire en mesurant et chronométrant le déplacement du ménisque de liquide dans le capillaire au cours du temps. L'analyse mathématique des résultats d'observation, à savoir les couples L et t associés, dans l'unité de calcul 39 va permettre d'obtenir les caractéristiques rhéologiques de l'échantillon de liquide 11. Il sera ainsi possible de déterminer si ce liquide est ou n'est pas newtonien. Dans le cas d'un liquide newtonien la viscosité sera fournie par un seul couple L et t directement par un simple calcul. Dans le cas d'un liquide non newtonien, le viscosimètre et le procédé de mesure fourniront le graphique distance L - temps t, ainsi que les rhéogrammes habituellement demandés, à savoir le graphique contrainte de cisaillement $\tau$ - vitesse de cisaillement D et le graphique viscosité $\eta$ - vitesse de cisaillement D. Il est bien entendu que d'autres graphiques et calculs pourront être effectués.

Le traitement des résultats est basé sur les bases mathématiques suivantes. Nous traiterons d'abord le cas des liquides newtoniens.

A partir de l'équation de Hagen-Poiseuille valable pour les liquides newtoniens, on peut déduire l'équation suivante exprimant la vitesse linéaire du liquide dans le capillaire:

$$\frac{dL}{dt} = \frac{R^2 \Delta p}{8 \eta L} \qquad\qquad (2)$$

où

$\eta$ est la viscosité du liquide

$\Delta p$ est la différence de pression appliquée aux extrémités du capillaire

L représente la distance parcourue par le liquide dans le capillaire pendant la durée t

R est le rayon interne du capillaire.

La vitesse de liquide dans le capillaire dL/dt diminue donc linéairement avec l'augmentation de L.

Par intégration de l'équation (2) on obtient l'équation :

$$\eta = \frac{\Delta p R^2 t}{4 L^2} \qquad\qquad (3)$$

Cette équation peut être utilisée dans l'analyse des résultats obtenus dans le cas d'un capillaire horizontal. Elle donne la relation parabolique entre la distance parcourue L par le liquide et le temps t. Connaissant $\Delta p$ et R, une seule mesure du couple L-t permet de déterminer la viscosité d'un liquide newtonien.

Dans le cas d'un capillaire vertical, la pression hydrostatique du liquide aspiré doit être prise en considération. Etant de signe opposé à $\Delta p$, l'équation (2) devient alors :

$$\frac{dL}{dt} = \frac{R^2}{8\eta}\left(\frac{\Delta p}{L} - \varrho g\right) \qquad (4)$$

où $\varrho$ est la masse volumique du liquide et g la constante gravitationnelle.

L'intégration de l'équation (4) donne la formule suivante:

$$\eta = \frac{-R^2 \varrho g t}{8\left(L + \frac{\Delta p}{\varrho g} In \frac{\Delta p - \varrho g L}{\Delta p}\right)} \qquad (5)$$

Connaissant $\Delta p$, $\varrho$ et R, une seule mesure du couple L-t permet de déterminer la viscosité $\eta$ d'un liquide newtonien.

L'étude de la courbe expérimentale L-t et des graphiques $\tau$ - D et $\eta$- D permet de vérifier si le liquide est newtonien ou pas.

La contrainte du cisaillement (shear stress) $\tau$ peut être calculée pour chaque longueur de déplacement L du liquide dans le capillaire en utilisant, dans le cas d'un capillaire horizontal, la relation:

$$\tau = \frac{R\Delta p}{2L} \qquad (6)$$

ou, dans le cas d'un capillaire vertical :

$$\tau = \frac{R(\Delta p - \varrho g L)}{2L} \qquad (7)$$

La vitesse de cisaillement peut être déterminée en utilisant :

$$D = \frac{4\frac{dL}{dt}}{R} \qquad (8)$$

Ces deux variables $\tau$ et D permettent de tracer le graphique $\tau$ - D. Comme la viscosité apparente est $\eta = \tau/D$, on obtient directement le graphique $\eta$-D.

La vitesse linéaire dL/dt est la tangente à la courbe expérimentale L-t à n'importe quel temps $t_n$. Elle est déterminée en établissant, par exemple au moyen des formules de Lagrange, une équation polynomiale passant par les points adjacents à $t_n$ qui peut alors être différenciée mathématiquement.

Un liquide newtonien sera caractérisé par une droite passant par l'origine dans le graphique $\tau$-D, la pente représentant la valeur de la viscosité. Un comportement différent signifiera que le liquide ne suit pas une allure newtonienne. Les graphiques $\tau$-D et $\eta$-D caractérisent alors le produit examiné.

Il est bien entendu que les équations (4), (5) et (7) devront être modifiées, dans le cas d'un déplacement vertical du liquide de haut en bas, considérant que la force de gravité et la différence de pression agissent dans la même direction. Dans le cas d'un capillaire incliné d'un angle $\alpha$ par rapport à l'horizontale, il y aura également lieu de tenir compte du sinus de cet angle $\alpha$ dans les équations.

Les résultats de viscosité sont présentés dans les unités usuelles (Pa.s ou Poises).

Si nécessaire les corrections habituelles utilisées en rhéométrie capillaire peuvent être appliquées au système, telles que les corrections d'entrée et la correction de Weissenberg-Rabinowitsch, par exemple. Bien que souvent négligeable par rapport à $\Delta p$ une correction pour la pression capillaire peut être envisagée en incorporant dans l'équation (2) ou (4) la contribution de cette force, déterminée indépendamment par la méthode de montée capillaire, par exemple. Des corrections relatives à la profondeur d'immersion du capillaire sont aussi envisageables.

Les données ainsi obtenues permettent de déterminer, par les méthodes connues, l'équation rhéologique à laquelle obéit le liquide étudié, par exemple selon les modèles de mise en équation de Ostwald-de-Waele, Bingham, Carreau, etc.

Le viscosimètre et le procédé de mesure décrits permettent de couvrir une large plage de vitesse de cisaillement en un seul essai, en choisissant de façon adéquate les paramètres $\Delta$p et R et la longueur du capillaire. On obtient en une seule montée de liquide, les caractéristiques rhéologiques complètes de liquides newtoniens et non newtoniens. Cette rapidité à la lecture et à la mesure permet entre autre de faire des mesures ponctuelles pour enregistrer des modifications de viscosité dans des produits évoluant au cours du temps, par exemple au repos ou pendant un traitement donné.

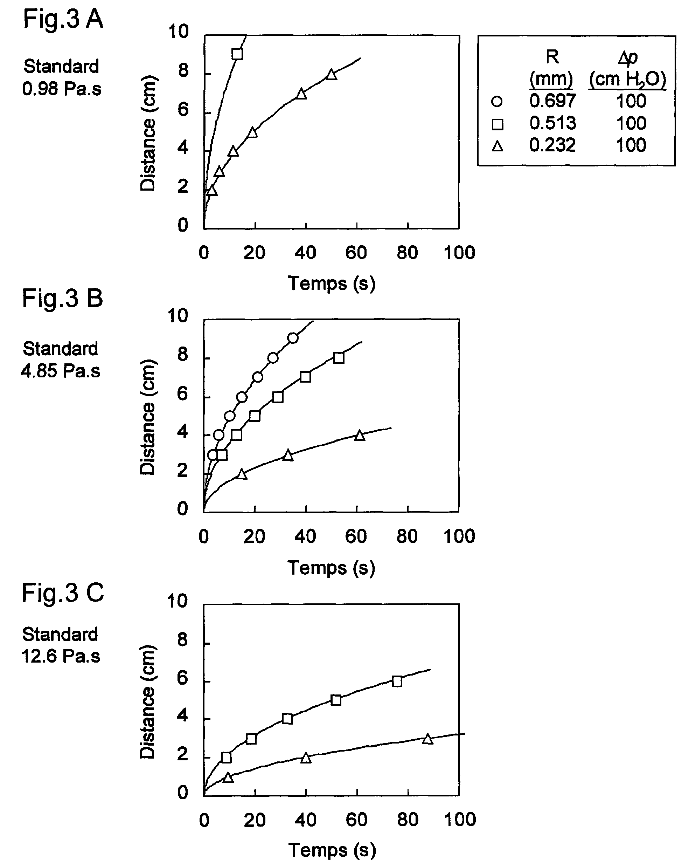

Des exemples de mesures au moyen de ce type de viscosimètre et procédé sont présentés aux figures 3 à 7.

Les figures 3A, 3B et 3C représentent des vérifications expérimentales de l'équation (5) et du procédé selon l'invention avec des standards de viscosimétrie, sous forme de graphiques mettant en relation la distance (cm) parcourue par le liquide en fonction du temps (s) dans le capillaire vide pour des capillaires ayant un rayon interne R de 0.697, 0.513 et 0.232 mm, la différence de pression $\Delta$p étant de 100 cm $H_2$O, la température de 25°C. Les expériences des figures 3A, 3B, respectivement 3C ont été effectuées avec des standards de 0.98 Pa.s de 4.85 Pa.s, respectivement 12.6 Pa.s. On remarque que les points mesurés se situent bien sur les courbes théoriques calculées d'après l'équation (5).

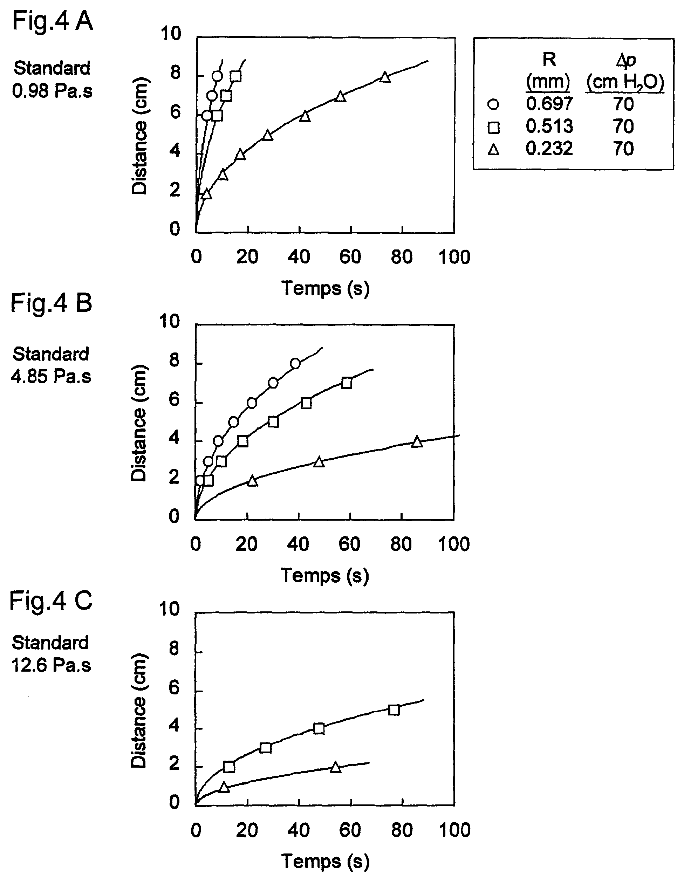

Les graphiques des figures 4A, 4B, et 4C illustrent une seconde série de vérifications expérimentales identiques, si ce n'est que la différence de pression $\Delta$p a été fixée à 70 cm $H_2$O. Ici également les points mesurés se situent bien sur les courbes théoriques calculées d'après l'équation (5).

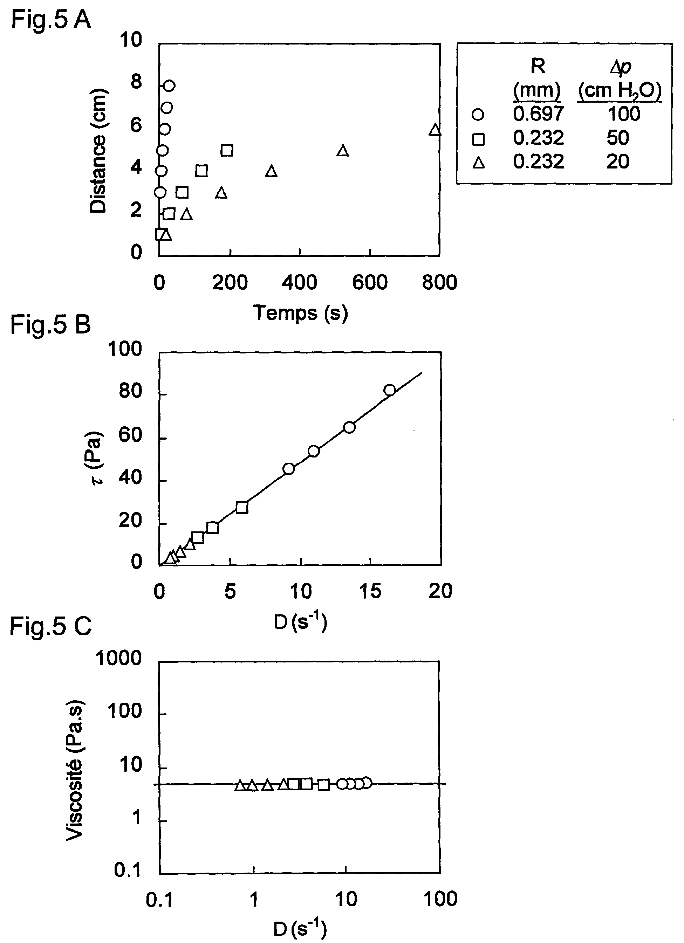

Les trois graphiques illustrés aux figures 5A, 5B et 5C concernent des mesures viscosimétriques effectuées à une température de 25°C sur un liquide standard de viscosimétrie de 4.85 Pa.s avec des capillaires à rayon interne:

a) de 0.697 mm pour un $\Delta$p de 100 cm $H_2$O,
b) de 0.232 mm pour un $\Delta$p de 50 cm $H_2$O, et
c) de 0.232 mm pour un $\Delta$p de 20 cm $H_2$O.

Les points calculés, à partir des points indiqués sur le graphique distance - temps forment une droite inclinée passant par l'origine ayant une pente correspondant à la viscosité sur le graphique contrainte de cisaillement $\tau$-vitesse de cisaillement D et une droite horizontale sur le graphique viscosité-vitesse de cisaillement D. Ces résultats confirment clairement le bien fondé du procédé et du viscosimètre selon l'invention, ainsi que la nature newtonienne du standard utilisé.

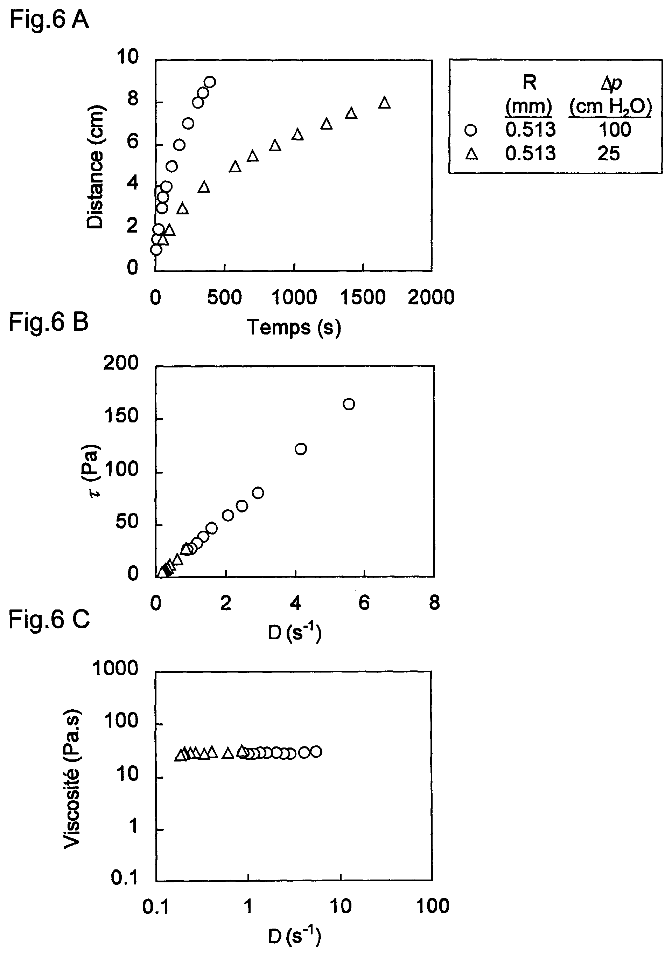

Les trois graphiques des figures 6A, 6B et 6C illustrent les résultats de mesures viscosimétriques d'un miel de sapin à une température de 20°C et les calculs des rhéogrammes. Deux séries de mesures avec un capillaire d'un rayon interne R de 0.513 mm et des différences de pression de 100 et 25 cm $H_2$O ont été effectuées. Les résultats montrent que ce miel se comporte comme un liquide sensiblement newtonien du fait que le graphique $\tau$-D montre une droite inclinée passant par l'origine et le graphique $\eta$-D une droite horizontale.

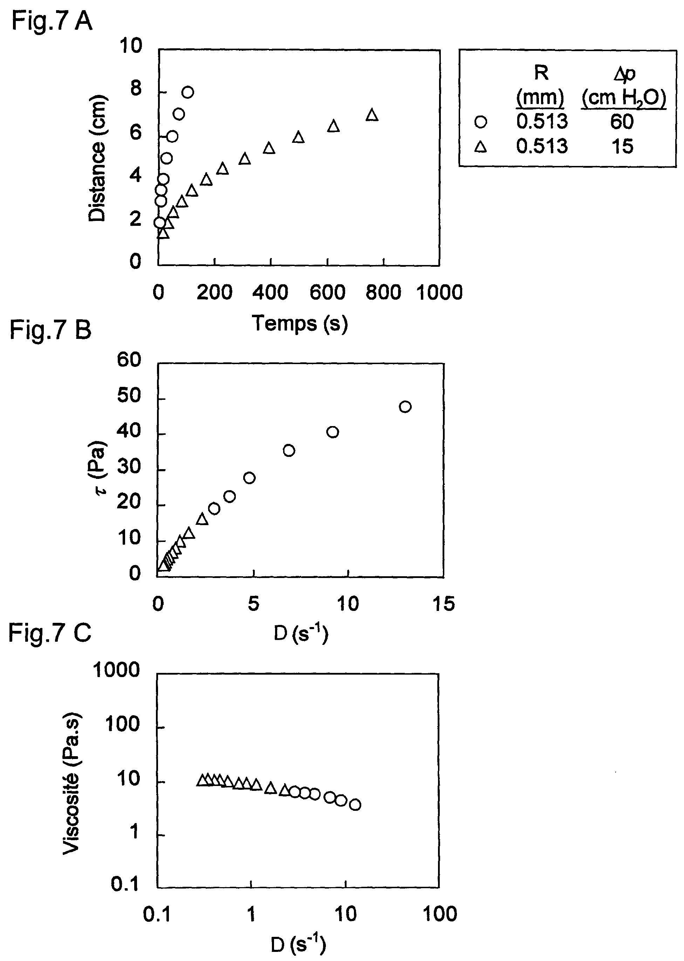

Les figures 7A, 7B et 7C illustrent les résultats des mesures viscosimétriques d'une solution de 1,5% poids de carboxyméthylcellulose dans l'eau à 20°C. Les mesures ont été faites avec un capillaire d'un rayon interne R de 0.513 mm avec des différences de pression de 60 et 15 cm $H_2$O. Le diagramme $\tau$- D de la figure 7B montre non plus une droite, mais une courbe présentant une courbure plus prononcée aux vitesses de cisaillement D élevées. La figure 7C montre que la viscosité $\eta$ augmente et tend à se stabiliser lors de la diminution de la vitesse de cisaillement. La solution étudiée est donc bien un liquide non newtonien.

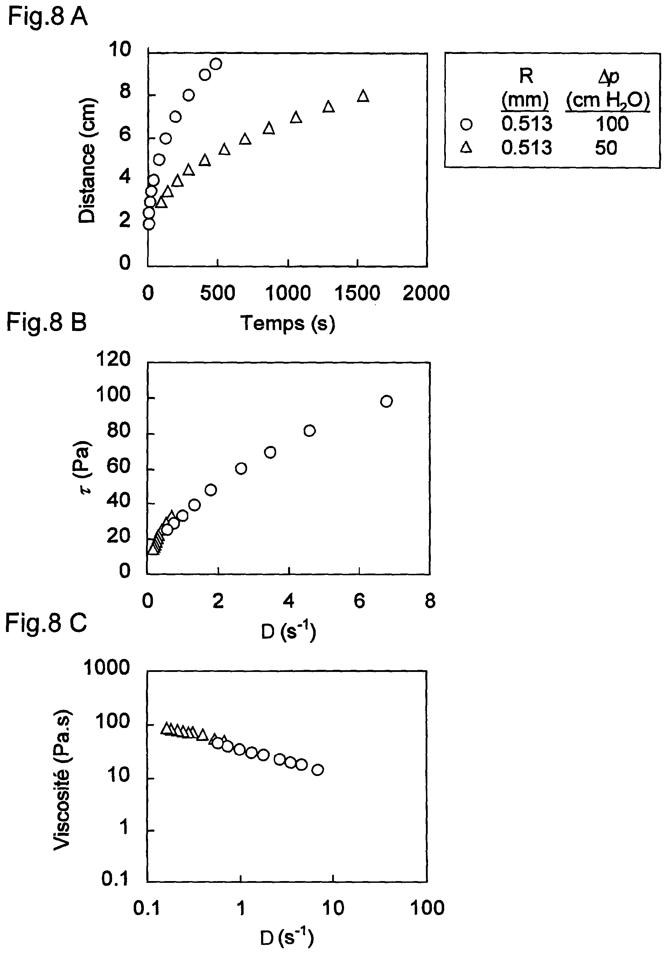

Un autre exemple de mesures viscosimétriques d'une substance non newtonienne est présenté aux figures 8A, 8B et 8C et concerne les mesures sur une sauce mayonnaise à une température de 20°C au moyen d'un capillaire d'un rayon interne R de 0.513 mm avec des différences de pression de 100 et 50 cm $H_2$O. La croissance de la viscosité $\eta$ pour des vitesses de cisaillement D décroissantes est clairement visible.

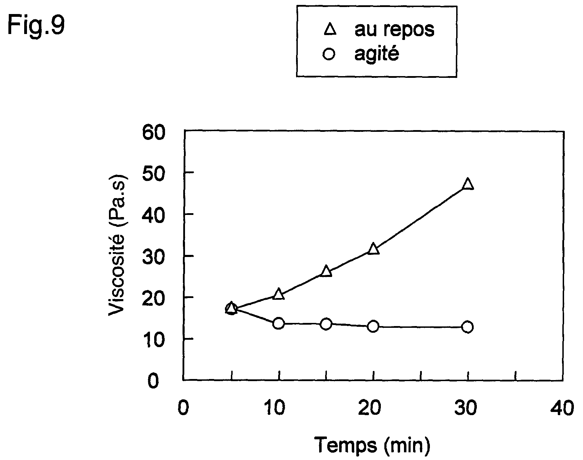

Le viscosimètre et le procédé selon l'invention sont particulièrement utiles lorsqu'on désire suivre ponctuellement les variations de la viscosité au cours du temps des substances à analyser, puisque les mesures de viscosité sont obtenues très rapidement de manière fiable. Un exemple de telles mesures de variations est illustré à la figure 9 présentant la viscosité apparente d'un mélange farine/eau (50%/50%) en fonction du temps soit au repos soit soumis à une agitation mécanique. Les mesures ont été effectuées à une température de 35°C avec un capillaire d'un rayon interne R de 0.697 mm et avec une différence de pression $\Delta$p de 100 cm $H_2$O. On remarque que la viscosité de ce mélange augmente considérablement au repos, tandis qu'elle diminue initialement pour se stabiliser ensuite, si le mélange est soumis à une agitation mécanique.

Le viscosimètre et le procédé décrits s'appliquent à l'étude viscosimétrique de toutes substances, fluides, liquides, mélanges présentant des valeurs de viscosité très faibles (0.1 m Pa.s) à très élevées ($10^5$ Pa.s), il suffira de choisir les tubes ou capillaires et les différences de pression $\Delta$P adéquats.

Il est bien entendu que le mode de réalisation décrit ci-dessus ne présente aucun caractère limitatif et qu'il peut recevoir toutes modifications désirables à l'intérieur du cadre tel que défini par la revendication 1. En particulier, le liquide pourrait être poussé à travers un tube ou un capillaire par une différence de pression positive stabilisée par manostat obtenue par exemple au moyen d'un piston, d'une pompe, d'un gaz comprimé. Ce tube pourrait occuper toute orientation verticale, horizontale ou inclinée.

On pourrait également commencer à chronométrer l'avance du ménisque de liquide non pas dès l'orifice d'entrée 14 du capillaire ou tube, mais seulement à partir d'une certaine distance de cet orifice, le capillaire ou le tube sera alors partiellement rempli de liquide et on observera et chronométrera l'avance du liquide dans la partie non remplie de liquide du capillaire ou tube.

Les moyens de détection et d'observation du déplacement du ménisque pourront être constitués par tous dispositifs de détection photoélectrique, de contact mécanique ou électrique, de détection par thermistance ou encore au moyen d'un dispositif du type "scanner" ou lecteur optique, tel qu'utilisé en informatique. Le capillaire sera alors agencé au voisinage d'un tel scanner qui permet de suivre avec précision le déplacement du ménisque du liquide et de fournir les données digitalisées de temps t et de distance parcourue L directement à un ordinateur effectuant le traitement mathématique indiqué ci-dessus.

La stabilisation de la pression du liquide pourra être réalisée au moyen de tout manostat basé sur la pression hydrostatique ou sur la pression de tout autre liquide, ou encore par tout autre manostat.

La régulation de la température de l'échantillon et du capillaire pourra être effectuée par conduction thermique, convection thermique, par rayonnement, par micro-ondes, par effet Peltier, etc.

Le capillaire pourra également être calibré au préalable avec un liquide standard. De même le procédé de mesure pourra inclure la mesure du déplacement d'un liquide connu et/ou standard dans le capillaire, pour étalonnage.

En outre, il sera également possible de chronométrer le déplacement du ménisque de liquides non collantes au tube ou capillaire lorsque le tube ou capillaire est vidé graduellement au lieu d'être rempli graduellement, la vitesse de déplacement augmentant alors avec le temps.

En résumé, l'invention permet les avantages suivants:

- Rapidité de mise en oeuvre,
- Rapidité d'équilibrage de température (quantités faibles d'échantillon, parois fines du capillaire),
- Rapidité à la lecture (liquides newtoniens: < 1 min), permettant entre autre de faire des mesures ponctuelles pour enregistrer des modifications de viscosité dans des produits évoluant au repos,
- Lecture aisée (ménisque bien visible),
- Gamme étendue de viscosités (en variant Δp et R),
- Faible quantité d'échantillon (microanalyse),
- Récupération facile de l'échantillon,
- Unités non arbitraires (Pa.s),
- Utilisation de capillaires à usage unique toujours propres, nettoyage superflu,
- Couverture d'une large plage de vitesses de cisaillement en un seul essai (bon choix des paramètres Δp, R et longueur du capillaire).

**Revendications**

1. Viscosimètre comprenant un tube (10) d'une section prédéterminée destinée au passage d'un liquide (11) dont on désire déterminer la viscosité et des premiers moyens (12) pour appliquer une différence de pression prédéterminée (Δp) entre les orifices d'entrée (14) et de sortie (15) du tube, **caractérisé par le fait qu'**il comprend des seconds moyens (35) pour détecter le déplacement du ménisque dudit liquide dans le tube (10) au moins partiellement non rempli de liquide, ces seconds moyens (35) étant agencés de façon à déterminer le temps (t) lorsque le liquide atteint au moins un point situé à une certaine distance (L) de l'orifice d'entrée (14) du tube et des troisièmes moyens (39) pour calculer la viscosité et/ou les caractéristiques rhéologiques du liquide à partir des valeurs de distance (L) et de temps (t) grâce à un traitement mathématique.

2. Viscosimètre selon la revendication 1, **caractérisé par le fait que** les troisièmes moyens (39) sont agencés pour calculer, en particulier pour les liquides newtoniens, la viscosité selon une forme intégrée de l'équation de Hagen-Poiseuille.

3. Viscosimètre selon la revendication 2, **caractérisé par le fait que** le calcul de la viscosité est effectué selon les formes intégrées suivantes de l'équation de Hagen-Poiseuille:

$$\eta = \frac{\Delta p R^2 t}{4L^2}$$

dans le cas d'un tube (10) horizontal ou

$$\eta = \frac{-R^2 \varrho g t}{8(L + \frac{\Delta p}{\varrho g} In \frac{\Delta p - \varrho g L}{\Delta p})}$$

dans le cas d'un tube (10) vertical, le déplacement du liquide s'effectuant en montant ;
où

η est la viscosité du liquide
Δp est la différence de pression appliquée aux extrémités du tube
L représente la distance parcourue par le liquide dans le tube pendant le temps t.
R est le rayon interne du tube
ϱ est la masse volumique du liquide
g est la constante gravitationnelle.

**4.** Viscosimètre selon l'une des revendications 1 à 3, **caractérisé par le fait que** les troisièmes moyens (39) sont agencés pour calculer

A) la contrainte de cisaillement τ selon l'équation

$$\tau = \frac{R\Delta p}{2L}$$

dans le cas d'un tube (10) horizontal, ou

$$\tau = \frac{R(\Delta p - \varrho g L)}{2L}$$

dans le cas d'un tube vertical, le déplacement du liquide s'effectuant en montant,
B) la vitesse de cisaillement D selon l'équation

$$D = \frac{4\frac{dL}{dt}}{R},$$

et
C) les viscosités apparentes η selon l'équation η = τ/D pour les couples distance parcourue (L) - temps (t)

où

η est la viscosité,
Δp est la différence de pression appliquée aux extrémités du tube,
L représente la distance parcourue par le liquide dans le tube pendant la durée t
R est le rayon interne du tube
ϱ est la masse volumique du liquide
g est la constante gravitationnelle.

**5.** Viscosimètre selon la revendication 4, **caractérisé par le fait que** les troisièmes moyens (39) sont agencés pour établir le graphique distance (L) parcourue par le liquide - temps (t), le graphique contrainte de cisaillement (τ) - vitesse de cisaillement (D) et/ou le graphique viscosité (η) - vitesse de cisaillement (D).

**6.** Viscosimètre selon la revendication 1, **caractérisé par le fait que** le tube est un capillaire (10) fixé de façon amovible à au moins une vanne (30) permettant de relier le capillaire alternativement aux premiers moyens constitués par un dispositif manostat (18) basé sur la pression hydrostatique ou à un conduit d'échappement (32).

**7.** Viscosimètre selon la revendication 6, **caractérisé par le fait que** le dispositif manostat (18) comprend un récipient fermé (19) partiellement rempli d'un liquide (26) dont la base est connectée à un tuyau (20) qui présente une extrémité inférieure recourbée ouverte située à une hauteur (H) prédéterminée inférieure au niveau du liquide dans le récipient, la partie supérieure (25) du récipient non rempli de liquide étant reliée de façon étanche par un conduit (31) et la vanne (30) au capillaire (10), des moyens étant prévus pour régler la hauteur (H) de façon à régler ladite différence de pression (Δp).

**8.** Viscosimètre selon la revendication 6, **caractérisé par le fait que** le capillaire (10) est placé dans un second tube (42) parcouru par un liquide de thermostatisation, une règle graduée (36) étant prévue sur ce second tube (42) et agencée de façon à coopérer avec des moyens optiques et chronométriques (37,38) destinés à mesurer l'avance du liquide (11) dans le capillaire (10).

**9.** Viscosimètre selon la revendication 1, **caractérisé par le fait que** les seconds moyens (35) sont constitués par un lecteur optique du type scanner agencé en regard du tube (10).

**10.** Procédé pour déterminer la viscosité d'un liquide (11) selon lequel on fait passer le liquide dans un tube (10) d'une section prédéterminée en appliquant une différence de pression (Δp) prédéterminée entre les orifices d'entrée (14) et de sortie (15) du tube, **caractérisé par le fait que** l'on détecte le déplacement du ménisque du liquide (11) dans le tube (10) qui est au moins partiellement non rempli de liquide, que l'on détermine le temps (t) lorsque le liquide a atteint au moins un point situé à une certaine distance (L) de l'orifice d'entrée (14) du tube et que l'on calcule la viscosité et/ou les caractéristiques rhéologiques du liquide (10) à partir des valeurs de distance (L) et de temps (t) au moyen d'un traitement mathématique.

**11.** Procédé selon la revendication 1, **caractérisé par le fait que** l'on calcule la viscosité selon une forme intégrée de l'équation de Hagen-Poiseuille.

**12.** Procédé selon la revendication 11, **caractérisé par le fait que** l'on calcule la viscosité selon les formes intégrées suivantes de l'équation de Hagen-Poiseuille:

$$\eta = \frac{\Delta p R^2 t}{4L^2}$$

dans le cas d'un tube (10) horizontal ou

$$\eta = \frac{-R^2 \varrho g t}{8(L + \frac{\Delta p}{\varrho g} In \frac{\Delta p - \varrho g L}{\Delta p})}$$

dans le cas d'un tube (10) vertical, le déplacement du liquide s'effectuant en montant,
où

η est la viscosité du liquide
Δp est la différence de pression appliquée aux extrémités du tube
L représente la distance parcourue par le liquide dans le tube pendant le temps t
R est le rayon interne du tube
ϱ est la masse volumique du liquide
g est la constante gravitationnelle.

**13.** Procédé selon l'une des revendications 10 à 12, **caractérisé par le fait que** l'on calcule les paramètres suivants :

A) la constante de cisaillement τ selon l'équation

$$\tau = \frac{R\Delta p}{2L}$$

dans le cas d'un tube (10) horizontal, ou

$$\tau = \frac{R(\Delta p - \varrho g L)}{2L}$$

dans le cas d'un tube vertical, le déplacement du liquide s'effectuant en montant,
B) la vitesse de cisaillement D selon l'équation

$$D = \frac{4\dfrac{dL}{dt}}{R},$$

et
C) les viscosités apparentes $\eta$ selon l'équation $\eta = \tau/D$ pour les couples distance parcourue (L) - temps (t).

où

$\eta$ est la viscosité
$\Delta p$ est la différence de pression appliquée aux extrémités du tube
L représente la distance parcourue par le liquide dans le tube pendant la durée t
R est le rayon interne du tube
$\varrho$ est la masse volumique du liquide
g est la constante gravitationnelle

**14.** Procédé selon la revendication 13, **caractérisé par le fait que** l'on établit le graphique distance (L) parcourue par le liquide - temps (t), le graphique contrainte de cisaillement ($\tau$) - vitesse de cisaillement (D) et/ou le graphique viscosité ($\eta$) - vitesse de cisaillement (D).

## Fig.1

## Fig.2

Fig.3 A

Standard
0.98 Pa.s

| | R (mm) | Δp (cm H$_2$O) |
|---|---|---|
| ○ | 0.697 | 100 |
| □ | 0.513 | 100 |
| △ | 0.232 | 100 |

Fig.3 B

Standard
4.85 Pa.s

Fig.3 C

Standard
12.6 Pa.s

Fig.4 A

Standard
0.98 Pa.s

| | R (mm) | Δp (cm H₂O) |
|---|---|---|
| ○ | 0.697 | 70 |
| □ | 0.513 | 70 |
| △ | 0.232 | 70 |

Fig.4 B

Standard
4.85 Pa.s

Fig.4 C

Standard
12.6 Pa.s

Fig.5 A

| | R (mm) | $\Delta p$ (cm H$_2$O) |
|---|---|---|
| ○ | 0.697 | 100 |
| □ | 0.232 | 50 |
| △ | 0.232 | 20 |

Fig.5 B

Fig.5 C

**Fig.6 A**

| | R (mm) | $\Delta p$ (cm H$_2$O) |
|---|---|---|
| O | 0.513 | 100 |
| △ | 0.513 | 25 |

**Fig.6 B**

**Fig.6 C**

Fig.7 A

Fig.7 B

Fig.7 C

Fig.8 A

Fig.8 B

Fig.8 C

Fig.9

| | |
|---|---|
| △ | au repos |
| ○ | agité |

**Office européen des brevets**

**RAPPORT DE RECHERCHE EUROPEENNE**

Numéro de la demande

EP 00 11 9738

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | GB 2 255 644 A (SKC LTD) 11 novembre 1992 (1992-11-11) * abrégé * * page 13, ligne 22 - page 17, ligne 5 * --- | 1,10 | G01N11/06 |
| X | US 3 798 960 A (GLASS J) 26 mars 1974 (1974-03-26) * abrégé; revendication 1 * --- | 1 | |
| Y | DE 36 11 867 A (LTG GES FUER MESS UND VERFAHRE) 15 octobre 1987 (1987-10-15) * le document en entier * --- | 1-3,5,6, 9-12 | |
| Y | DE 43 20 813 A (SCHOTT GERAETE) 13 janvier 1994 (1994-01-13) * abrégé; revendications 19,21; figures 2,3 * * page 4, ligne 58 - page 6, ligne 47 * --- | 1-3,5,6, 9-12 | |
| A | WO 96 01988 A (DOW CHEMICAL CO) 25 janvier 1996 (1996-01-25) * page 4, ligne 34 - page 7, ligne 27 * --- | 4,13 | |
| A | US 3 048 999 A (A. P. R. POCHAN) 14 août 1962 (1962-08-14) * colonne 3, ligne 38-40; figure 4 * * colonne 5, ligne 65 - colonne 6, ligne 32; revendications 4,8,9 * --- | 8 | |
| A | US 3 699 804 A (GASSMANN HANS ULRICH ET AL) 24 octobre 1972 (1972-10-24) * abrégé * --- | 1 | |
| A | US 4 302 965 A (JOHNSON TIMOTHY W ET AL) 1 décembre 1981 (1981-12-01) * abrégé; figure 1 * ---- | 1,2,6 | |

**DOMAINES TECHNIQUES RECHERCHES (Int.Cl.7)**

G01N

Le présent rapport a été établi pour toutes les revendications

| Lieu de la recherche | Date d'achèvement de la recherche | Examinateur |
|---|---|---|
| BERLIN | 12 février 2001 | Brison, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**  EP 00 11 9738

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2001

| Document brevet cité au rapport de recherche | | Date de publication | Membre(s) de la famille de brevet(s) | | Date de publication |
|---|---|---|---|---|---|
| GB 2255644 | A | 11-11-1992 | DE<br>JP<br>KR<br>US | 4210845 A<br>5107173 A<br>9605362 B<br>5224375 A | 12-11-1992<br>27-04-1993<br>24-04-1996<br>06-07-1993 |
| US 3798960 | A | 26-03-1974 | AU<br>BE<br>CA<br>CH<br>DE<br>FR<br>GB<br>IT<br>JP<br>JP<br>NL<br>ZA | 5702873 A<br>801084 A<br>974792 A<br>567260 A<br>2330946 A<br>2190269 A<br>1399783 A<br>990754 B<br>49053089 A<br>53031756 B<br>7308236 A,B,<br>7303991 A | 19-12-1974<br>18-12-1973<br>23-09-1975<br>30-09-1975<br>10-01-1974<br>25-01-1974<br>02-07-1975<br>10-07-1975<br>23-05-1974<br>04-09-1978<br>21-12-1973<br>29-01-1975 |
| DE 3611867 | A | 15-10-1987 | AUCUN | | |
| DE 4320813 | A | 13-01-1994 | DE<br>DK<br>EP<br>JP<br>US | 59305934 D<br>582082 T<br>0582082 A<br>6174624 A<br>5365776 A | 30-04-1997<br>06-10-1997<br>09-02-1994<br>24-06-1994<br>22-11-1994 |
| WO 9601988 | A | 25-01-1996 | AU | 2908195 A | 09-02-1996 |
| US 3048999 | A | 14-08-1962 | FR<br>GB | 1071241 A<br>733602 A | 27-08-1954 |
| US 3699804 | A | 24-10-1972 | CH<br>DE<br>FR<br>GB<br>NL<br>SE | 519168 A<br>2102416 A<br>2075813 A<br>1329202 A<br>7100820 A<br>361093 B | 15-02-1972<br>29-07-1971<br>08-10-1971<br>05-09-1973<br>26-07-1971<br>15-10-1973 |
| US 4302965 | A | 01-12-1981 | US<br>US | 4916678 A<br>4750359 A | 10-04-1990<br>14-06-1988 |

EPO FORM P0460

Pour tout renseignement concernant cette annexe : voir Journal Officiel de l'Office européen des brevets, No.12/82